# EUROPEAN PATENT APPLICATION

(11) **EP 3 293 899 A1**
(43) Date of publication of application: **14.03.2018**
(21) Application number: 15893936.3
(22) Date of filing: 28.10.2015
(51) Int. Cl.: H04B 17/21, H04B 17/318

(54) **METHOD AND SYSTEM OF DEBUGGING CONDUCTED INTERFERENCE IN FREQUENCY MODULATED SIGNAL, AND ELECTRONIC APPARATUS THEREOF**

(30) Priority: 29.05.2015 CN 201510290484
(71) Applicant: Phicomm (Shanghai) Co., Ltd., Shanghai 201616 (CN)
(72) Inventor: NING, Xinwu, Shanghai 201616 (CN)
(74) Representative: Sun, Yiming
(86) International application number: PCT/CN2015/093033
(87) International publication number: WO 2016/192288

(57) **Abstract**

The present invention provides a method for debugging conducted interference of frequency modulation signals. The method includes: if the frequency modulation antenna operates in a disconnected mode, performing a radio station search within a whole frequency modulation frequency band, and acquiring a received signal strength indicator value of each frequency point within the whole frequency modulation frequency band when the frequency modulation antenna operates in the disconnected mode; judging whether the acquired received signal strength indicator value is within a standard range of the received signal strength indicator values of the frequency point, if the acquired received signal strength indicator value is not within the standard range, indicating that conducted interference is present and performing the next step, and if the acquired received signal strength indicator value is within the standard range, indicating that conducted interference is not present and performing the previous step to re-acquire the received signal strength indicator value of each frequency point within the whole frequency modulation frequency band when the frequency modulation antenna operates in the disconnected mode; and searching for a conducted interference source, and performing a debugging operation corresponding to the conducted interference source according to the conducted interference source. According to the present invention, a conducted interference source is determined by acquiring an RSSI value of the FM in combination with matching of an FM signal line. This optimizes FM performance of the electronic device, and provides a rectification solution for debugging of the FM conducted interference.

## Description

### TECHNICAL FIELD

The present invention pertains to the technical field of electronic device debugging, relates to a debugging method and system, and in particular relates to a method and system for debugging conducted interference of frequency modulation signals, and an electronic device thereof.

### BACKGROUND

Nowadays the communication technologies are quickly developing and electronic devices are becoming more and more advanced. Especially, with the development of the communication technologies, mobile terminals in the electronic devices, in particular, hardware configurations of smart terminals based on the third generation mobile communication technology (3G), the fourth generation mobile communication technology (4G) and long term evolution (LTE) are more and more powerful. With a diversity of functions and applications, such smart terminals have become necessary in people's daily life.

The current mobile terminals mostly have the frequency modulation (FM) function, and this function enhances multimedia experience of the mobile terminals, such that users can enjoy the FM radios anytime and anywhere. With rapid development of intelligent mobile terminals, batteries with a sufficiently larger capacity and a diversity of functions are desired. In such terminals, the space for deploying PCBs is becoming smaller and smaller, and thus even much smaller space is left for the FM modules. Although some protection solutions are deployed for the FM during design, some interference may be inevitably introduced.

For example, the FM chip in a mobile phone is very sensitive to noise, and is easily subjected to noise interference from other modules. As a result, spurious radio stations may be detected during an automatic search for radio stations. This problem becomes severer where signals are weak. In the prior art, whether a radio station is valid or not is judged according to a condition that RSSI is greater than-96 dBm. If the noise interference indicated by the RSSI at a frequency point is greater than -96 dBm, it is considered that a radio station is searched, which, however, is not a real radio station but noise interference. This is the reason why a spurious radio station is searched.

In the prior art, a solution is provided only for eliminating the FM spurious radio stations, whereas no solution is provided for debugging FM signal conducted interference. Consequently, with the solution of the prior art, the electronic device does not achieve an optimized FM performance.

Therefore, it is a technical problem to be urgently solved in the industry as how to provide a method and system for debugging conducted interference of frequency modulation signals, and an electronic device to solve the problem that the electronic device fails to have better conduction performance because it is hard to identify a conducted interference source to debug the conducted interference of frequency modulation signals in the prior art.

### SUMMARY

In view of the above defects in the prior art, the present invention is intended to provide a method and system for debugging conducted interference of frequency modulation signals, and an electronic device, to solve the problem that the electronic device fails to have better conduction performance because it is hard to identify a conducted interference source to debug the conducted interference of frequency modulation signals in the prior art.

To achieve the above objective and other related objectives, one aspect of the present invention provides a method for debugging conducted interference of frequency modulation signals which is applied to an electronic device, the frequency modulation signal being transmitted through an impedance matching circuit to a frequency modulation chip of the electronic device via a frequency modulation antenna, the impedance matching circuit including a first impedance matching circuit connected to the frequency modulation chip and a second impedance matching circuit connected to the first impedance matching circuit; wherein the method includes the following steps: if the frequency modulation antenna operates in a disconnected mode, performing a radio station search within a whole frequency modulation frequency band, and acquiring a received signal strength indicator value of each frequency point within the whole frequency modulation frequency band when the frequency modulation antenna operates in the disconnected mode; judging whether the acquired received signal strength indicator value of each frequency point is within a standard range of the received signal strength indicator values of the frequency point, if the acquired received signal strength indicator value is not within the standard range, it is indicated that conducted interference is present and performing the next step, and if the acquired received signal strength indicator value is within the standard range, it is indicated that conducted interference is not present and performing the previous step to re-acquire the received signal strength indicator value of each frequency point within the whole frequency modulation frequency band when the frequency modulation antenna operates in the disconnected mode; and searching for a conducted interference source, and performing a debugging operation corresponding to the conducted interference source according to the conducted interference source.

Optionally, the step of searching for a conducted interference source includes: enabling the electronic device to operate in a first debugging mode, performing a radio station search within the whole frequency modulation frequency band, and acquiring a received signal strength indicator value of each frequency point within the whole frequency modulation frequency band when the electronic device operates in the first debugging mode; judging whether the acquired received signal strength indicator value of each frequency point within the whole frequency modulation frequency band when the electronic device operates in the first debugging mode is within the standard range of the received signal strength indicator values of the frequency point, if the acquired received signal strength indicator value is within the standard range, it is determined that the conducted interference is from the second impedance matching circuit and disconnecting a grounding circuit element in the second impedance matching circuit, and if the acquired received signal strength indicator value is not within the standard range, performing the next step; and judging whether the acquired received signal strength indicator value of each frequency point within the whole frequency modulation frequency band when the electronic device operates in the first debugging mode satisfies a predetermined judgment condition, if the acquired received signal strength indicator value satisfies the predetermined judgment condition, it is determined that the conducted interference is from the second impedance matching circuit, the first impedance matching circuit and the frequency modulation chip, continuing to search for the conducted interference source, disconnecting the grounding circuit elements in the first impedance matching circuit and the second impedance matching circuit and detecting circuitry of the frequency modulation chip, and if the acquired received signal strength indicator value does not satisfy the predetermined judgment condition, it is determined that the conducted interference is from the first impedance matching circuit and the frequency modulation chip and continuing to search for the conducted interference source.

Optionally, the method for debugging conducted interference of frequency modulation signals further includes: if it is determined that the conducted interference is from the second impedance matching circuit, the first impedance matching circuit and the frequency modulation chip, enabling the electronic device to switch from the first debugging mode to the second debugging mode, performing the radio station search within the whole frequency modulation frequency band, and acquiring the received signal strength indicator value of each frequency point within the whole frequency modulation frequency band when the electronic device operates in the second debugging mode; judging whether the acquired received signal strength indicator value of each frequency point within the whole frequency modulation frequency band when the electronic device operates in the second debugging mode is within the standard range of the received signal strength indicator values of the frequency point, if the acquired received signal strength indicator value is within the standard range, it is determined that the conducted interference is from the second impedance matching circuit and the first impedance matching circuit and disconnecting the grounding circuit elements in the first impedance matching circuit and the second impedance matching circuit, and if the acquired received signal strength indicator value is not within the standard range, performing the next step; and judging whether the acquired received signal strength indicator value satisfies a predetermined judgment condition, if the acquired received signal strength indicator value satisfies the predetermined judgment condition, it is determined that the conducted interference is from the second impedance matching circuit, the first impedance matching circuit and the frequency modulation chip, disconnecting the grounding circuit elements in the first impedance matching circuit and the second impedance matching circuit and detecting circuitry of the frequency modulation chip, and if the acquired received signal strength indicator value does not satisfy the predetermined judgment condition, it is determined that the conducted interference is from the second impedance matching circuit and the frequency modulation chip, disconnecting the grounding circuit element in the second impedance matching circuit and detecting circuitry of the frequency modulation chip.

Optionally, the method for debugging conducted interference of frequency modulation signals further includes: if it is determined that the conducted interference is from the first impedance matching circuit and the frequency modulation chip, enabling the electronic device to switch from the first debugging mode to the second debugging mode, performing the radio station search within the whole frequency modulation frequency band, and acquiring the received signal strength indicator value of each frequency point within the whole frequency modulation frequency band when the electronic device operates in the second debugging mode; judging whether the acquired received signal strength indicator value of each frequency point within the whole frequency modulation frequency band when the electronic device operates in the second debugging mode is within the standard range of the received signal strength indicator values of the frequency point, if the acquired received signal strength indicator value is within the standard range, it is determined that the conducted interference is from the first impedance matching circuit and disconnecting a grounding circuit element in the first impedance matching circuit, and if the acquired received signal strength indicator value is not within the standard range, performing the next step; and judging whether the acquired received signal strength indicator value satisfies the predetermined judgment condition, if the acquired received signal strength indicator value satisfies the predetermined judgment condition, it is determined that the conducted interference is from the first impedance matching circuit and disconnecting the grounding circuit element in the first impedance matching circuit, and if the acquired received signal strength indicator value does not satisfy the predetermined judgment condition, it is determined that the conducted interference is from the frequency modulation chip and detecting circuitry of the frequency modulation chip.

Optionally, the standard range of the received signal strength indicator values of the frequency point is between a standard received signal strength indicator value of the frequency point and a sum of the standard received signal strength indicator value of the frequency point and an error threshold, and the standard received signal strength indicator value of the frequency point is equal to -114 dBm.

Another aspect of the present invention provides a system for debugging conducted interference of frequency modulation signals, applied to an electronic device, the frequency modulation signal being transmitted through an impedance matching circuit to a frequency modulation chip of the electronic device via a frequency modulation antenna, the impedance matching circuit including a first impedance matching circuit connected to the frequency modulation chip and a second impedance matching circuit connected to the first impedance matching circuit; wherein the system includes a received signal strength indicator value acquiring module, configured to perform a radio station search within a whole frequency modulation frequency band, and acquire a received signal strength indicator value of each frequency point within the whole frequency modulation frequency band when the frequency modulation antenna operates in the disconnected mode if the frequency modulation antenna operates in a disconnected mode; a detecting module, connected to the received signal strength indicator value acquiring module, and configured to: judge whether the acquired received signal strength indicator value of each frequency point is within a standard range of the received signal strength indicator values of the frequency point; if the acquired received signal strength indicator value is not within the standard range, call an indicating module to indicate that the conducted interference is present; and if the acquired received signal strength indicator value is within the standard range, call the indicating module to indicate that the conducted interference is not present, and call the received signal strength indicator value acquiring module to continue to acquire received signal strength indicator value of each frequency point within the whole frequency modulation frequency band when the frequency modulation antenna operates in the disconnected mode; and a control module, connected to the received signal strength indicator value acquiring module and the indicating module, and configured to search for a conducted interference source, and perform a debugging operation matching the conducted interference source according to the conducted interference source.

Optionally, the control module is further configured to: enable the electronic device to operate in a first debugging mode, call the received signal strength indicator value acquiring module to perform a radio station search within a whole frequency modulation frequency band and acquire a received signal strength indicator value of each frequency point within the whole frequency modulation frequency band when the frequency modulation antenna operates in the first debugging mode; judge whether the acquired received signal strength indicator value is within the standard range of the received signal strength indicator values of the frequency point, if the acquired received signal strength indicator value is within the standard range, it is determined that the conducted interference is from the second impedance matching circuit, the first impedance matching circuit and the frequency modulation chip, continue to search for the conducted interference source, disconnect the grounding circuit elements in the first impedance matching circuit and the second impedance matching circuit, and detect circuitry of the frequency modulation chip; and if the acquired received signal strength indicator value is not within the standard range, it is determined that the conducted interference is from the first impedance matching circuit and the frequency modulation chip, and continue to search for the conducted interference source.

Optionally, the control module is further configured to: if it is determined that the conducted interference is from the second impedance matching circuit, the first impedance matching circuit and the frequency modulation chip, enable the electronic device to switch from the first debugging mode to the second debugging mode, perform the radio station search within the whole frequency modulation frequency band, and acquire the received signal strength indicator value of each frequency point within the whole frequency modulation frequency band when the electronic device operates in the second debugging mode; judge whether the acquired received signal strength indicator value is within the standard range of the received signal strength indicator values of the frequency point; if the acquired received signal strength indicator value is within the standard range, it is determined that the conducted interference is from the second impedance matching circuit and the first impedance matching circuit and disconnect the grounding circuit elements in the first impedance matching circuit and the second impedance matching circuit; if the acquired received signal strength indicator value is not within the standard range, continue to judge whether the acquired received signal strength indicator value satisfies a predetermined judgment condition; if the acquired received signal strength indicator value satisfies the predetermined judgment condition, it is determined that the conducted interference is from the second impedance matching circuit, the first impedance matching circuit and the frequency modulation chip, disconnect the grounding circuit elements in the first impedance matching circuit and the second impedance matching circuit, and detect circuitry of the frequency modulation chip; and if the acquired received signal strength indicator value does not satisfy the predetermined judgment condition, it is determined that the conducted interference is from the second impedance matching circuit and the frequency modulation chip, disconnect the grounding circuit element in the second impedance matching circuit, and detect circuitry of the frequency modulation chip.

Optionally, the control module is further configured to: if it is determined that the conducted interference is from the first impedance matching circuit and the frequency modulation chip, enable the electronic device to switch from the first debugging mode to the second debugging mode, perform the radio station search within the whole frequency modulation frequency band, and acquire the received signal strength indicator value of each frequency point within the whole frequency modulation frequency band when the electronic device operates in the second debugging mode; judge whether the acquired received signal strength indicator value is within the standard range of the received signal strength indicator values of the frequency point; if the acquired received signal strength indicator value is within the standard range, it is determined that the conducted interference is from the first impedance matching circuit, and disconnect the grounding circuit element in the first impedance matching circuit; if the acquired received signal strength indicator value is not within the standard range, continue to judge whether the acquired received signal strength indicator value of each frequency point within the whole frequency modulation frequency band when the electronic device operates in the second debugging mode satisfies the predetermined judgment condition; if the acquired received signal strength indicator value satisfies the predetermined judgment condition, it is determined that the conduction interference is from the first impedance matching circuit, and disconnect the grounding circuit element in the first impedance matching circuit; and if the acquired received signal strength indicator value does not satisfy the predetermined judgment condition, it is determined that the conducted interference is from the frequency modulation chip and detect circuitry of the frequency modulation chip.

Still another aspect of the present invention provides an electronic device, including: a pluggable frequency modulation antenna; a frequency modulation chip, connected to the pluggable frequency modulation antenna, and configured to perform a radio station search, wherein the frequency modulation antenna is connected to the frequency modulation chip via a matching circuit; and a frequency modulation signal conducted interference debugging system connected to the frequency modulation chip and the matching circuit, configured to acquire a received signal strength indicator value of each frequency point within a whole frequency modulation frequency band when the electronic device operates in a plurality of control modes, judge whether conducted interference is present according to the acquired received signal strength indicator value, if the conducted interference is not present, continue to search for a conducted interference source and perform a debugging operation corresponding to the conducted interference source according to the conducted interference source, and if the conducted interference is present, perform no debugging operation.

As described above, the method and system for debugging conducted interference of frequency modulation signals, and the electronic device according to the present invention achieve the following beneficial effects:
The method and system for debugging conducted interference of frequency modulation signals according to the present invention are applied to an electronic device, and determine a conducted interference source by acquiring an RSSI value of the FM in combination with matching of an FM signal line. This optimizes FM performance of the electronic device, and provides a rectification solution for the debugging of the FM conducted interference.

### BRIEF DESCRIPTION OF THE DRAWINGS

FIG. 1 is a connection circuit diagram of a frequency modulation antenna, an impedance matching circuit and a frequency modulation chip;
FIG. 2 is a schematic flowchart of a method for debugging conducted interference of frequency modulation signals according to the present invention;
FIG. 3 is a schematic flowchart of step S4 in the method for debugging conducted interference of frequency modulation signals according to the present invention;
FIG. 4 is a schematic structural principle diagram of a system for debugging conducted interference of frequency modulation signals according to the present invention; and
FIG. 5 is a schematic structural principle diagram of an electronic device according to the present invention.

Reference numerals and denotations thereof:
- 1: Frequency modulation antenna
- 2: Impedance matching circuit
- 3: Frequency modulation chip
- 21: First impedance matching circuit
- 22: Second impedance matching circuit
- 4: Frequency modulation signal conducted interference debugging system
- 41: Received signal strength indicator value acquiring module
- 42: Detecting module
- 43: Indicating module
- 44: Control module
- S1-S4: Steps
- S41-S58: Steps

### DETAILED DESCRIPTION

The embodiments of the present invention are described hereinafter with reference to specific examples. A person skilled in the art would readily understand and know the other advantages and technical effects of the present invention based on the content disclosed in the specification of the present invention. The present invention may also be implemented or applied with reference to other different specific embodiments. Various details in the specification may also be based on different viewpoints and applications, and various modifications or variations may be made without departing from the spirit of the present invention. It should be noted that in cases of no conflict, the embodiments and features in the embodiments of the present invention may be combined together.

It should be noted that the drawings in the embodiments are merely intended to illustratively explain the basic concept of the present invention, and the drawings only illustrate components relevant to the present invention and are not drawn according to the quantity of components, the shapes and dimensions thereof in practice. The shape, quantity and scale of the components in practical implementation may be randomly altered, and the deployment of the components may be even more complicated.

In the method and system for debugging conducted interference of frequency modulation signals, and the electronic device according to the present invention, the interference is typically categorized into radiation interference and conducted interference, and frequency modulation interference of the electronic device is mostly from the conducted interference. According to the present invention, the FM conducted interference source is located by the connected/disconnected states of FM received signal strength value indicator (RSSI) value collected at each frequency point cooperated with the FM antenna.

### Embodiment 1

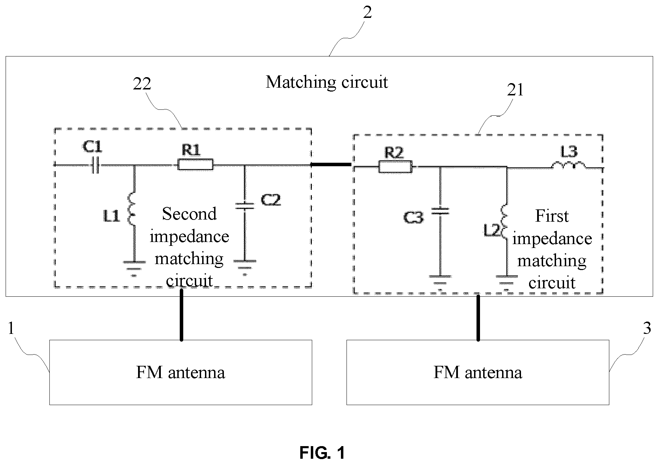

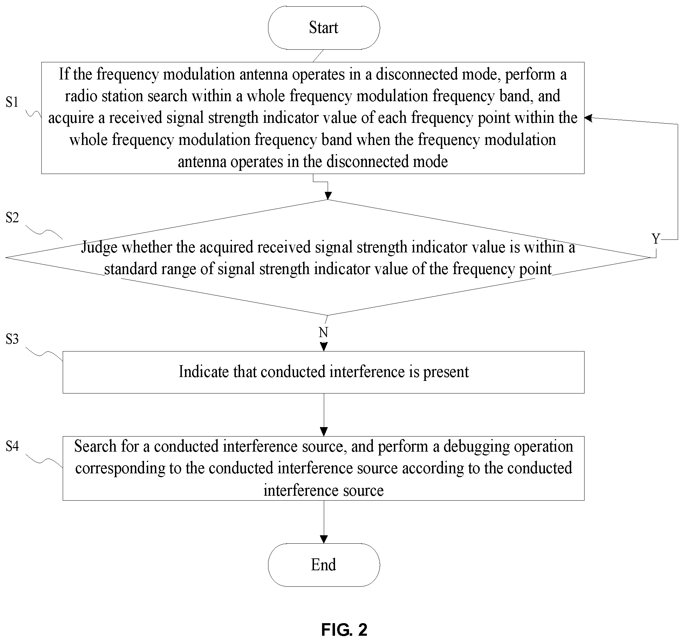

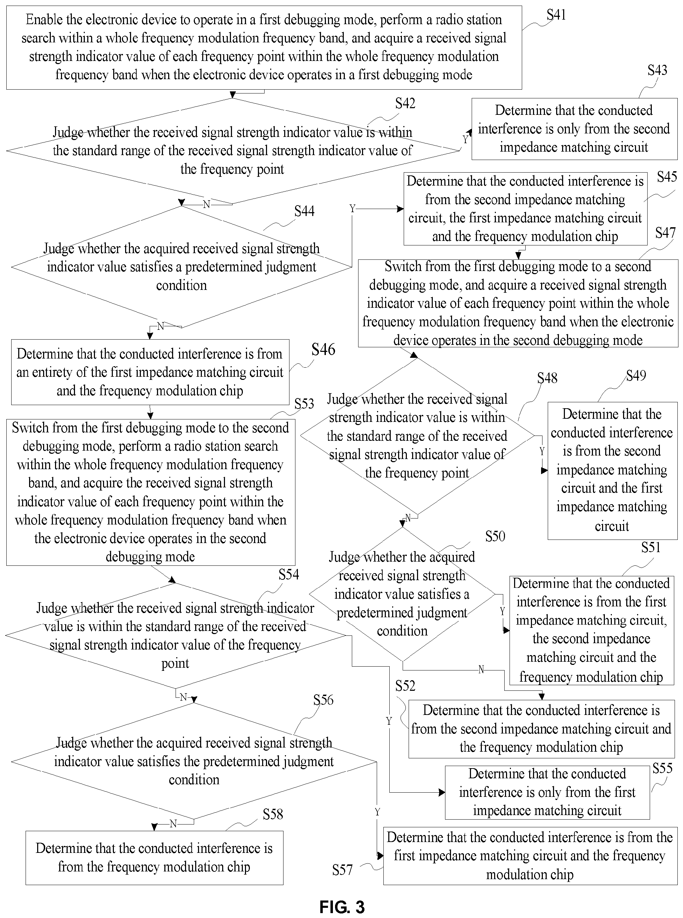

This embodiment provides a method for debugging conducted interference of frequency modulation signals. The method is applied to an electronic device, wherein the electronic device includes a smart phone, a tablet computer and the like. Referring to FIG. 1, a connection circuit diagram of a frequency modulation antenna, an impedance matching circuit and a frequency modulation chip is illustrated. The frequency modulation signal is transmitted through an impedance matching circuit 2 to a frequency modulation chip 3 of the electronic device via a frequency modulation antenna 1. The impedance matching circuit 2 includes a first impedance matching circuit 21 connected to the frequency modulation chip 3, and a second impedance matching circuit 22 connected to the first impedance matching circuit 21. In this embodiment, the first impedance matching circuit is also referred to as a chip-end impedance matching circuit, and the second impedance matching circuit is also referred to as a frequency modulation antenna-end impedance matching circuit. Referring to FIG. 2, a schematic flowchart of a frequency modulation signal conducted interference debugging method according to the present invention is illustrated. As illustrated in FIG. 2, the method includes the following steps:
S1: If the frequency modulation antenna operates in a disconnected mode, for example, in a situation that a headphone is not connected to a mobile phone, a radio station search is performed within a whole frequency modulation frequency band, and a received signal strength indicator value of each frequency point within the whole frequency modulation frequency band when the frequency modulation antenna operates in the disconnected mode is acquired, that is, an RRSI value of each frequency point. An ideal value of the acquired RSSI value of each frequency point when the frequency antenna operates in the disconnected mode is -114 dBm.
S2: Whether the acquired received signal strength indicator value of each frequency point is within a standard range of the received signal strength indicator values of the frequency point is judged, if the acquired received signal strength indicator value is not within the standard range, step S3 and step S4 are performed, and if the acquired received signal strength indicator value is within the standard range, step S5 is performed, that is, it is indicated that conducted interference is not present and the process returns step S1 to re-acquire the received signal strength indicator value of each frequency point within the whole frequency modulation frequency band when the frequency modulation antenna operates in the disconnected mode. In this embodiment, the standard range of the received signal strength indicator values of the frequency point is between a standard received signal strength indicator value of the frequency point and a sum of the standard received signal strength indicator value of the frequency point and an error threshold (that is, -114 dBm, -114 dBm+Δ), and the standard received signal strength indicator value of the frequency point is equal to -114 dBm.
S3: Presence of conducted interference is indicated.
S4: A conducted interference source is searched, and a debugging operation corresponding to the conducted interference source is performed according to the conducted interference source. Referring to FIG. 3, a specific schematic flowchart of step S4 is illustrated. Step S4 includes the following steps:
   S41: enabling the electronic device to operate in a first debugging mode, performing a radio station search within the whole frequency modulation frequency band, and acquiring a received signal strength indicator value of each frequency point within the whole frequency modulation frequency band when the electronic device operates in the first debugging mode; wherein in this embodiment, the first debugging mode refers to a mode in which the first impedance matching circuit is made to disconnect from the second impedance matching circuit;
   S42: judging whether the acquired received signal strength indicator value of each frequency point within the whole frequency modulation frequency band when the electronic device operates in the first debugging mode is within the standard range of the received signal strength indicator values of the frequency point, if the acquired received signal strength indicator value is within the standard range, performing step S43, which it is determined that the conducted interference is only from the second impedance matching circuit and disconnecting a grounding circuit element in the second impedance matching circuit, i.e., disconnecting an inductor L1 and a capacitor C2 in the second impedance matching circuit in this embodiment, and if the acquired received signal strength indicator value is not within the standard range, performing the next step; and
   S44: judging whether the acquired received signal strength indicator value of each frequency point within the whole frequency modulation frequency band when the electronic device operates in the first debugging mode satisfies a predetermined judgment condition; if the acquired received signal strength indicator value satisfies the predetermined judgment condition, performing step S45, which it is determined that the conducted interference is from an entirety of the second impedance matching circuit, the first impedance matching circuit and the frequency modulation chip and the conducted interference source needs to be further searched, that is, performing step S47; and if the acquired received signal strength indicator value does not satisfy the predetermined judgment condition, performing step S46, which it is determined that the conducted interference is from an entirety of the first impedance matching circuit and the frequency modulation chip and the conducted interference source needs to be further searched, that is, performing step S53; wherein in this embodiment, the predetermined judgment condition may be improved according to the interference, if a received signal strength indicator value of a frequency point exceeding a first judgment threshold is within the standard range of the received signal strength indicator values of the frequency point, it is considered that the predetermined judgment condition is satisfied, and if a received signal strength indicator value of a frequency point exceeding a second judgment threshold is not within the standard range of the received signal strength indicator values of the frequency point, it is considered that the predetermined judgment condition is not satisfied;
   S47: if it is determined that the conducted interference is from the second impedance matching circuit, the first impedance matching circuit and the frequency modulation chip, enabling the electronic device to switch from the first debugging mode to the second debugging mode, performing the radio station search within the whole frequency modulation frequency band, and acquiring the received signal strength indicator value of each frequency point within the whole frequency modulation frequency band when the electronic device operates in the second debugging mode; wherein in this embodiment, the second debugging mode refers to a mode in which the frequency modulation chip is made to disconnect from the first impedance matching circuit;
   S48: judging whether the acquired received signal strength indicator value of each frequency point within the whole frequency modulation frequency band when the electronic device operates in the second debugging mode is within the standard range of the received signal strength indicator values of the frequency point; if the acquired received signal strength indicator value is within the standard range, performing step S49, which it is determined that the conducted interference is from the first impedance matching circuit and the second impedance matching circuit, disconnecting the grounding circuit elements in the first impedance matching circuit and the second impedance matching circuit, in this embodiment, as illustrated in FIG. 1, disconnecting an inductor L2 and a capacitor C3 in the first impedance matching circuit and the inductor L1 and the capacitor C2 in the second impedance matching circuit; and if the acquired received signal strength indicator value is not within the standard range, performing step S50;
   S50: judging whether the acquired received signal strength indicator value of each frequency point within the whole frequency modulation frequency band when the electronic device operates in the second debugging mode satisfies the predetermined judgment condition; if the acquired received signal strength indicator value satisfies the predetermined judgment condition, performing step S51, which it is determined that the conducted interference is from the first impedance matching circuit, the second impedance matching circuit and the frequency modulation chip, disconnecting the grounding circuit elements in the first impedance matching circuit and the second impedance matching circuit, that is, disconnecting the inductor L2 and the capacitor C3 in the first impedance matching circuit and the inductor L1 and the capacitor C2 in the second impedance matching circuit, detecting circuitry of the frequency modulation chip, for example, detecting the power supply of the frequency modulation chip and wiring of important signals; and if the acquired received signal strength indicator value does not satisfy the predetermined judgment condition, performing step S52which it is determined that the conducted interference is from the second impedance matching circuit and the frequency modulation chip, disconnecting the grounding circuit elements in the second impedance matching circuit, that is, disconnecting the inductor L1 and the capacitor C2 in the second impedance matching circuit, and detecting circuitry of the frequency modulation chip, for example, detecting the power supply of the frequency modulation chip and wiring of important signals;
   S53: if it is determined that the conducted interference is from the first impedance matching circuit and the frequency modulation chip, enabling the electronic device to switch from the first debugging mode to the second debugging mode, performing the radio station search within the whole frequency modulation frequency band, and acquiring the received signal strength indicator value of each frequency point within the whole frequency modulation frequency band when the electronic device operates in the second debugging mode;
   S54: judging whether the acquired received signal strength indicator value of each frequency point within the whole frequency modulation frequency band when the electronic device operates in the second debugging mode is within the standard range of the received signal strength indicator values of the frequency point, if the acquired received signal strength indicator value is within the standard range, performing step S55, which it is determined that the conducted interference is from the first impedance matching circuit and disconnecting a grounding circuit element in the first impedance matching circuit, i.e., disconnecting an inductor L1 and a capacitor C3 in the first impedance matching circuit in this embodiment, and if the acquired received signal strength indicator value is not within the standard range, performing step S56; and
   S56: judging whether the acquired received signal strength indicator value of each frequency point within the whole frequency modulation frequency band when the electronic device operates in the second debugging mode satisfies the predetermined judgment condition; if the acquired received signal strength indicator value satisfies the predetermined judgment condition, performing step S57, which it is determined that the conducted interference is from the first impedance matching circuit and the frequency modulation chip, disconnecting the grounding circuit element in the first impedance matching circuit, that is, disconnecting the inductor L2 and the capacitor C3 in the first impedance matching circuit, and detecting circuitry of the frequency modulation chip, for example, detecting the power supply of the frequency modulation chip and wiring of important signals; and if the acquired received signal strength indicator value does not satisfy the predetermined judgment condition, performing step S58, which it is determined that the conducted interference is only from the frequency modulation chip, and detecting circuitry of the frequency modulation chip, for example, detecting the power supply of the frequency modulation chip and wiring of important signals.

The frequency modulation signal conducted interference debugging method in this embodiment determines a conducted interference source by acquiring an RSSI value of the FM in combination with matching of an FM signal line. This optimizes FM performance of the electronic device, and provides a rectification solution for the debugging of the FM conducted interference.

### Embodiment 2

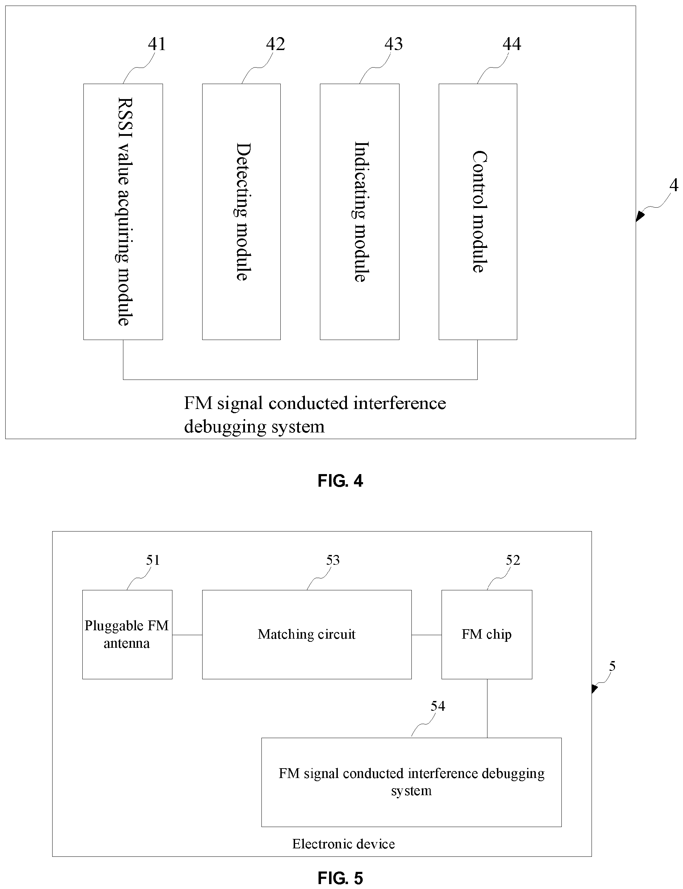

This embodiment provides a system 4 for debugging conducted interference of frequency modulation signals. The system is applied to an electronic device, and the frequency modulation signal conducted interference debugging method is also applied to the electronic device, wherein the electronic device includes a smart phone, a tablet computer and the like. FIG. 2 is a connection circuit diagram of a frequency modulation antenna, an impedance matching circuit and a frequency modulation chip. The frequency modulation signal is transmitted through an impedance matching circuit 2 to a frequency modulation chip 3 of the electronic device via a frequency modulation antenna 1. The impedance matching circuit 2 includes a first impedance matching circuit 21 connected to the frequency modulation chip 3, and a second impedance matching circuit 22 connected to the first impedance matching circuit 21. In this embodiment, the first impedance matching circuit is also referred to as a chip-end impedance matching circuit, and the second impedance matching circuit is also referred to as a frequency modulation antenna-end impedance matching circuit. Referring to FIG. 4, a schematic structural diagram of a system 4 for debugging conducted interference of frequency modulation signals 4 according to the present invention is illustrated. The system 4 includes: a received signal strength indicator value acquiring module 41, a detecting module 42, an indicating module 43, and a control module 44.

The received signal strength indicator value acquiring module 41 is configured to, if the frequency modulation antenna operates in a disconnected mode, for example, in a state where a headphone is not connected to a mobile phone, perform a radio station search within a whole frequency modulation frequency band, and acquire a received signal strength indicator value of each frequency point within the whole frequency modulation frequency band when the frequency modulation antenna operates in the disconnected mode, that is, an RSSI value of each frequency point. An ideal value of the acquired RSSI value of each frequency point when the frequency antenna operates in the disconnected mode is -114 dBm.

The detecting module 42 is connected to the received signal strength indicator value acquiring module 41, and configured to judge whether the acquired received signal strength indicator value of each frequency point is within a standard range of the received signal strength indicator values of the frequency point; if the acquired received signal strength indicator value is not within the standard range, call the indicating module 43 to indicate that conducted interference is present and the control module 44; and if the acquired received signal strength indicator value is within the standard range, call the indicating module 43 to indicate that the conducted interference is not present, and call the received signal strength indicator value acquiring module 41 to continue to acquire received signal strength indicator value of each frequency point within the whole frequency modulation frequency band when the frequency modulation antenna operates in the disconnected mode. In this embodiment, the standard range of the received signal strength indicator values of the frequency point is between a standard received signal strength indicator value of the frequency point and a sum of the standard received signal strength indicator value of the frequency point and an error threshold (that is, -114 dBm, -114 dBm+Δ), and the standard received signal strength indicator value of the frequency point is equal to -114 dBm.

The control module 44 is connected to the received signal strength indicator value acquiring module 41 and the indicating module 43, and configured to search for a conducted interference source, and perform a debugging operation matching the conducted interference source according to the conducted interference source. The control module 44 has the following functions:
enabling the electronic device to operate in a first debugging mode, and calling the received signal strength indicator value acquiring module 41 to perform the radio station search within the whole frequency modulation frequency band, and acquire a received signal strength indicator value of each frequency point within the whole frequency modulation frequency band when the electronic device operates in the first debugging mode; wherein in this embodiment, the first debugging mode refers to a mode in which the first impedance matching circuit is made to disconnect from the second impedance matching circuit;
judging whether the acquired received signal strength indicator value of each frequency point within the whole frequency modulation frequency band when the electronic device operates in the first debugging mode is within the standard range of the received signal strength indicator values of the frequency point; if the acquired received signal strength indicator value is within the standard range, performing step S43, which it is determined that the conducted interference is only from the second impedance matching circuit, and disconnecting the grounding circuit element in the second impedance matching circuit, in this embodiment, that is, disconnecting an inductor L1 and a capacitor C2 in the second impedance matching circuit; and if the acquired received signal strength indicator value is not within the standard range, continuing to judge whether the acquired received signal strength indicator value satisfies a predetermined judgment condition; if the acquired received signal strength indicator value satisfies the predetermined judgment condition, performing step S45, which it is determined that the conducted interference is from an entirety of the second impedance matching circuit, the first impedance matching circuit and the frequency modulation chip and the conducted interference source needs to be further searched; and if the acquired received signal strength indicator value does not satisfy the predetermined judgment condition, it is determined that the conducted interference is from an entirety of the first impedance matching circuit and the frequency modulation chip, and the conducted interference needs to be further searched; wherein in this embodiment, the predetermined judgment condition may be improved according to the interference, if a received signal strength indicator value of a frequency point exceeding a first judgment threshold is within the standard range of the received signal strength indicator values of the frequency point, it is considered that the predetermined judgment condition is satisfied, and if a received signal strength indicator value of a frequency point exceeding a second judgment threshold is not within the standard range of the received signal strength indicator values of the frequency point, it is considered that the predetermined judgment condition is not satisfied.

If it is determined that the conducted interference is from the second impedance matching circuit, the first impedance matching circuit and the frequency modulation chip, the control module 44 is configured to: enable the electronic device to switch from the first debugging mode to a second debugging mode, and call the received signal strength indicator value acquiring module 41 to perform the radio station search within the entire frequency modulation frequency band and acquire a received signal strength indicator value of each frequency point within the whole frequency modulation frequency band when the electronic device operates in the second debugging mode; wherein in this embodiment, the second debugging mode refers to a mode in which the frequency modulation chip is made to disconnect from the first impedance matching circuit;
if it is determined that the conducted interference is from the second impedance matching circuit, the first impedance matching circuit and the frequency modulation chip, enable the electronic device to switch from the first debugging mode to the second debugging mode, perform the radio station search within the whole frequency modulation frequency band, and acquire the received signal strength indicator value of each frequency point within the whole frequency modulation frequency band when the electronic device operates in the second debugging mode; wherein in this embodiment, the second debugging mode refers to a mode in which the frequency modulation chip is made to disconnect from the first impedance matching circuit;
judge whether the acquired received signal strength indicator value of each frequency point within the whole frequency modulation frequency band when the electronic device operates in the second debugging mode is within the standard range of the received signal strength indicator values of the frequency point; if the acquired received signal strength indicator value is within the standard range, it is determined that the conducted interference is from the first impedance matching circuit and the second impedance matching circuit, that is, disconnecting an inductor L2 and a capacitor C3 in the first impedance matching circuit and the inductor L1 and the capacitor C2 in the second impedance matching circuit as illustrated in FIG. 1 in this embodiment; if the acquired received signal strength indicator value is not within the standard range, continue to judge whether the acquired received signal strength indicator value satisfies the predetermined judgment condition; if the acquired received signal strength indicator value satisfies the predetermined judgment condition, it is determined that the conducted interference is from the first impedance matching circuit, the second impedance matching circuit and the frequency modulation chip, disconnect the grounding circuit elements of the first impedance matching circuit and the second impedance matching circuit, that is, disconnecting the inductor L2 and the capacitor C3 in the first impedance matching circuit and the inductor L1 and the capacitor C2 in the second impedance matching circuit, and detect circuitry of the frequency modulation chip, for example, detecting the power supply of the frequency modulation chip and wiring of important signals; and if the acquired received signal strength indicator value does not satisfy the predetermined judgment condition, it is determined that the conducted interference is from the second impedance matching circuit and the frequency modulation chip, disconnect the grounding circuit element in the second impedance matching circuit, that is, disconnecting the inductor L1 and the capacitor C2 in the second impedance matching circuit, and detect circuitry of the frequency modulation chip, for example, detecting the power supply of the frequency modulation chip and wiring of important signals.

If it is determined that the conducted interference is from the first impedance matching circuit and the frequency modulation chip, the control module 44 is configured to:
if it is determined that the conducted interference is from the first impedance matching circuit and the frequency modulation chip, enable the electronic device to switch from the first debugging mode to the second debugging mode, call the received signal strength indicator value acquiring module 41 to perform the radio station search within the whole frequency modulation frequency band, and acquire the received signal strength indicator value of each frequency point within the whole frequency modulation frequency band when the electronic device operates in the second debugging mode; and
judge whether the acquired received signal strength indicator value of each frequency point within the whole frequency modulation frequency band when the electronic device operates in the second debugging mode is within the standard range of the received signal strength indicator values of the frequency point; if the acquired received signal strength indicator value is within the standard range, perform step S55, which it is determined that the conducted interference is only from the first impedance matching circuit, and disconnecting the grounding circuit element in the first impedance matching circuit, that is, disconnecting the inductor L1 and the capacitor C2 in the second impedance matching circuit; if the acquired received signal strength indicator value is not within the standard range, continue to judge whether the acquired received signal strength indicator value satisfies the predetermined judgment condition; if the acquired received signal strength indicator value satisfies the predetermined judgment condition, it is determined that the conducted interference is from the first impedance matching circuit and the frequency modulation chip, disconnect the grounding circuit element in the first impedance matching circuit, that is, disconnect the inductor L2 and the capacitor C3 in the first impedance matching circuit, and detect circuitry of the frequency modulation chip, for example, detect the power supply of the frequency modulation chip and wiring of important signals; and if the acquired received signal strength indicator value does not satisfy the predetermined judgment condition, it is determined that the conducted interference is only from the frequency modulation chip, and detect circuitry of the frequency modulation chip, for example, detect the power supply of the frequency modulation chip and wiring of important signals.

The frequency modulation signal conducted interference debugging system in this embodiment is applied to an electronic device, and determines a conducted interference source by acquiring an RSSI value of the FM in combination with matching of an FM signal line. This optimizes FM performance of the electronic device, and provides a rectification solution for the debugging of the FM conducted interference.

### Embodiment 3

This embodiment provides an electronic device 5. Referring to FIG. 5, a principle structural diagram of an electronic device is illustrated. As illustrated in FIG. 5, the electronic device 5 includes: a pluggable frequency modulation antenna 51, a frequency modulation chip 52, a matching circuit 53, and a system 54 for debugging conducted interference of frequency modulation signals.

The frequency modulation chip 52 is connected to the pluggable frequency modulation antenna 51, and configured to perform a radio station search. The frequency modulation antenna is connected to the frequency modulation chip via the matching circuit 53.

The system 54 is connected to the frequency modulation chip 52 and the matching circuit 53, and is configured to acquire a received signal strength indicator value of each frequency point within a whole frequency modulation frequency band when the electronic device operates in a plurality of control modes, judge whether conducted interference is present in the electronic device according to the acquired received signal strength indicator value, if the conducted interference is not present, continue to search for the conducted interference source and perform a debugging operation corresponding to the conducted interference source according to the conducted interference source, and if the conducted interference is present, perform no debugging operation. The frequency modulation signal conducted interference debugging system 54 has all the functions of the frequency modulation signal conducted interference debugging system as described in Embodiment 2.

In conclusion, the method and system for debugging conducted interference of frequency modulation signals according to the present invention are applied to an electronic device, and determine a conducted interference source by acquiring an RSSI value of the FM in combination with matching of an FM signal line. This optimizes FM performance of the electronic device, and provides a rectification solution for the debugging of the FM conducted interference. Therefore, the present invention effectively overcomes various defects in the prior art and has high industrial value.

The above embodiments are merely used for exemplarily illustrate the principles, functions and effects of the present invention, but are not intended to limiting the present invention. Any person skilled in the art would make polishments or modifications to the above embodiments without departing from the spirit and category of the present invention. Therefore, any equivalent polishments or modifications derived a person having common knowledge in the art without departing from the spirit and inventive concept of the present invention shall all be covered within the scope defined by the claims of the present invention.

## Claims

1. A method for debugging conducted interference of frequency modulation signals, applied to an electronic device, the frequency modulation signal being transmitted through an impedance matching circuit to a frequency modulation chip of the electronic device via a frequency modulation antenna, the impedance matching circuit comprising a first impedance matching circuit connected to the frequency modulation chip and a second impedance matching circuit connected to the first impedance matching circuit; wherein the method comprises the following steps:
if the frequency modulation antenna operates in a disconnected mode, performing a radio station search within a whole frequency modulation frequency band, and acquiring a received signal strength indicator value of each frequency point within the whole frequency modulation frequency band when the frequency modulation antenna operates in the disconnected mode;
judging whether the acquired received signal strength indicator value is within a standard range of the received signal strength indicator values of the frequency point, if the acquired received signal strength indicator value is not within the standard range, it is indicated that conducted interference is present and performing the next step, and if the acquired received signal strength indicator value is within the standard range, it is indicated that conducted interference is not present and performing the previous step to re-acquire the received signal strength indicator value of each frequency point within the whole frequency modulation frequency band when the frequency modulation antenna operates in the disconnected mode; and
searching for a conducted interference source, and performing a debugging operation corresponding to the conducted interference source according to the conducted interference source.

2. The method for debugging conducted interference of frequency modulation signals according to claim 1, wherein the step of searching for a conducted interference source comprises:
enabling the electronic device to operate in a first debugging mode, performing the radio station search within the whole frequency modulation frequency band, and acquiring a received signal strength indicator value of each frequency point within the whole frequency modulation frequency band when the electronic device operates in the first debugging mode;
judging whether the acquired received signal strength indicator value of each frequency point within the whole frequency modulation frequency band when the electronic device operates in the first debugging mode is within the standard range of the received signal strength indicator values of the frequency point, if the acquired received signal strength indicator value is within the standard range, determining that the conducted interference is from the second impedance matching circuit and disconnecting a grounding circuit element in the second impedance matching circuit, and if the acquired received signal strength indicator value is not within the standard range, performing the next step; and
judging whether the acquired received signal strength indicator value of each frequency point within the whole frequency modulation frequency band when the electronic device operates in the first debugging mode satisfies a predetermined judgment condition, if the acquired received signal strength indicator value satisfies the predetermined judgment condition, determining that the conducted interference is from the second impedance matching circuit, the first impedance matching circuit and the frequency modulation chip, continuing to search for the conducted interference source, disconnecting the grounding circuit elements in the first impedance matching circuit and the second impedance matching circuit and detecting circuitry of the frequency modulation chip, and if the acquired received signal strength indicator value does not satisfy the predetermined judgment condition, determining that the conducted interference is from the first impedance matching circuit and the frequency modulation chip, and continuing to search for the conducted interference source.

3. The method for debugging conducted interference of frequency modulation signals according to claim 2, further comprising:
if it is determined that the conducted interference is from the second impedance matching circuit, the first impedance matching circuit and the frequency modulation chip, enabling the electronic device to switch from the first debugging mode to the second debugging mode, performing the radio station search within the whole frequency modulation frequency band, and acquiring the received signal strength indicator value of each frequency point within the whole frequency modulation frequency band when the electronic device operates in the second debugging mode;
judging whether the acquired received signal strength indicator value of each frequency point within the whole frequency modulation frequency band when the electronic device operates in the second debugging mode is within the standard range of the received signal strength indicator values of the frequency point, if the acquired received signal strength indicator value is within the standard range, determining that the conducted interference is from the second impedance matching circuit and the first impedance matching circuit and disconnecting the grounding circuit elements in the first impedance matching circuit and the second impedance matching circuit, and if the acquired received signal strength indicator value is not within the standard range, performing the next step; and
judging whether the acquired received signal strength indicator value of each frequency point within the whole frequency modulation frequency band when the electronic device operates in the second debugging mode satisfies a predetermined judgment condition, if the acquired received signal strength indicator value satisfies the predetermined judgment condition, determining that the conducted interference is from the second impedance matching circuit, the first impedance matching circuit and the frequency modulation chip, disconnecting the grounding circuit elements in the first impedance matching circuit and the second impedance matching circuit and detecting circuitry of the frequency modulation chip, and if the acquired received signal strength indicator value does not satisfy the predetermined judgment condition, determining that the conducted interference is from the second impedance matching circuit and the frequency modulation chip, disconnecting the grounding circuit element in the second impedance matching circuit and detecting circuitry of the frequency modulation chip.

4. The method for debugging conducted interference of frequency modulation signals according to claim 2, further comprising:
if it is determined that the conducted interference is from the first impedance matching circuit and the frequency modulation chip, enabling the electronic device to switch from the first debugging mode to the second debugging mode, performing the radio station search within the whole frequency modulation frequency band, and acquiring the received signal strength indicator value of each frequency point within the whole frequency modulation frequency band when the electronic device operates in the second debugging mode;
judging whether the acquired received signal strength indicator value of each frequency point within the whole frequency modulation frequency band when the electronic device operates in the second debugging mode is within the standard range of the received signal strength indicator values of the frequency point, if the acquired received signal strength indicator value is within the standard range, determining that the conducted interference is from the first impedance matching circuit and disconnecting a grounding circuit element in the first impedance matching circuit, and if the acquired received signal strength indicator value is not within the standard range, performing the next step; and
judging whether the acquired received signal strength indicator value of each frequency point within the whole frequency modulation frequency band when the electronic device operates in the second debugging mode satisfies the predetermined judgment condition, if the acquired received signal strength indicator value satisfies the predetermined judgment condition, determining that the conducted interference is from the first impedance matching circuit and disconnecting the grounding circuit element in the first impedance matching circuit, and if the acquired received signal strength indicator value does not satisfy the predetermined judgment condition, determining that the conducted interference is from the frequency modulation chip and detecting circuitry of the frequency modulation chip.

5. The method for debugging conducted interference of frequency modulation signals according to claim 1, wherein the standard range of the received signal strength indicator values of the frequency point is between a standard received signal strength indicator value of the frequency point and a sum of the standard received signal strength indicator value of the frequency point and an error threshold, and the standard received signal strength indicator value of the frequency point is equal to -114 dBm.

6. A system for debugging conducted interference of frequency modulation signals, applied to an electronic device, the frequency modulation signal being transmitted through an impedance matching circuit to a frequency modulation chip of the electronic device via a frequency modulation antenna, the impedance matching circuit comprising a first impedance matching circuit connected to the frequency modulation chip and a second impedance matching circuit connected to the first impedance matching circuit; wherein the system comprises:
a received signal strength indicator value acquiring module, configured to, if the frequency modulation antenna operates in a disconnected mode, perform a radio station search within a whole frequency modulation frequency band, and acquire a received signal strength indicator value of each frequency point within the whole frequency modulation frequency band when the frequency modulation antenna operates in the disconnected mode;
a detecting module, connected to the received signal strength indicator value acquiring module, and configured to: judge whether the acquired received signal strength indicator value of each frequency point is within a standard range of the received signal strength indicator values of the frequency point; if the acquired received signal strength indicator value is not within the standard range, call an indicating module to indicate that the conduction interference is present; and if the acquired received signal strength indicator value is within the standard range, call the indicating module to indicate that the conduction interference is not present, and call the received signal strength indicator value acquiring module to continue to acquire received signal strength indicator value of each frequency point within the whole frequency modulation frequency band when the frequency modulation antenna operates in the disconnected mode; and
a control module, connected to the received signal strength indicator value acquiring module and the indicating module, configured to search for a conducted interference source, and perform a debugging operation matching the conducted interference source according to the conducted interference source.

7. The system for debugging conducted interference of frequency modulation signals according to claim 6, wherein the control module is further configured to: enable the electronic device to operate in a first debugging mode, call the received signal strength indicator value acquiring module to perform a radio station search within a whole frequency modulation frequency band and acquire a received signal strength indicator value of each frequency point within the whole frequency modulation frequency band when the frequency modulation antenna operates in the first debugging mode; judge whether the acquired received signal strength indicator value is within the standard range of the received signal strength indicator values of the frequency point, if the acquired received signal strength indicator value is within the standard range, determine that the conducted interference is from the second impedance matching circuit, the first impedance matching circuit and the frequency modulation chip, continue to search for the conducted interference source, disconnect the grounding circuit elements in the first impedance matching circuit and the second impedance matching circuit, and detect circuitry of the frequency modulation chip; and if the acquired received signal strength indicator value is not within the standard range, determine that the conducted interference is from the first impedance matching circuit and the frequency modulation chip, and continue to search for the conducted interference source.

8. The system for debugging conducted interference of frequency modulation signals according to claim 7, wherein the control module is further configured to:
enable the electronic device to switch from the first debugging mode to the second debugging mode, perform the radio station search within the whole frequency modulation frequency band, and acquire the received signal strength indicator value of each frequency point within the whole frequency modulation frequency band when the electronic device operates in the second debugging mode if it is determined that the conducted interference is from the second impedance matching circuit, the first impedance matching circuit and the frequency modulation chip;
judge whether the acquired received signal strength indicator value is within the standard range of the received signal strength indicator values of the frequency point; if the acquired received signal strength indicator value is within the standard range, determine that the conducted interference is from the second impedance matching circuit and the first impedance matching circuit and disconnect the grounding circuit elements in the first impedance matching circuit and the second impedance matching circuit; if the acquired received signal strength indicator value is not within the standard range, continue to judge whether the acquired received signal strength indicator value satisfies a predetermined judgment condition; if the acquired received signal strength indicator value satisfies the predetermined judgment condition, determine that the conducted interference is from the second impedance matching circuit, the first impedance matching circuit and the frequency modulation chip, disconnect the grounding circuit elements in the first impedance matching circuit and the second impedance matching circuit, and detect circuitry of the frequency modulation chip; and if the acquired received signal strength indicator value does not satisfy the predetermined judgment condition, determine that the conducted interference is from the second impedance matching circuit and the frequency modulation chip, disconnect the grounding circuit element in the second impedance matching circuit, and detect circuitry of the frequency modulation chip.

9. The system for debugging conducted interference of frequency modulation signals according to claim 8, wherein the control module is further configured to:
enable the electronic device to switch from the first debugging mode to the second debugging mode, perform the radio station search within the whole frequency modulation frequency band, and acquire the received signal strength indicator value of each frequency point within the whole frequency modulation frequency band when the electronic device operates in the second debugging mode if it is determined that the conducted interference is from the first impedance matching circuit and the frequency modulation chip;
judge whether the acquired received signal strength indicator value is within the standard range of the received signal strength indicator values of the frequency point;
if the acquired received signal strength indicator value is within the standard range, determine that the conducted interference is from the first impedance matching circuit, and disconnect the grounding circuit element in the first impedance matching circuit;
if the acquired received signal strength indicator value is not within the standard range, continue to judge whether the acquired received signal strength indicator value of each frequency point within the whole frequency modulation frequency band when the electronic device operates in the second debugging mode satisfies the predetermined judgment condition;
if the acquired received signal strength indicator value satisfies the predetermined judgment condition, determine that the conduction interference is from the first impedance matching circuit, and disconnect the grounding circuit element in the first impedance matching circuit; and
if the acquired received signal strength indicator value does not satisfy the predetermined judgment condition, determine that the conduction interference is from the frequency modulation chip and detect circuitry of the frequency modulation chip.

10. An electronic device, comprising:
a pluggable frequency modulation antenna;
a frequency modulation chip, connected to the pluggable frequency modulation antenna, and configured to perform a radio station search, wherein the frequency modulation antenna is connected to the frequency modulation chip via a matching circuit; and
a system for debugging conduction interference of frequency modulation signals connected to the frequency modulation chip and the matching circuit and defined in any one of claims 6 to 9, configured to acquire a received signal strength indicator value of each frequency point within a whole frequency modulation frequency band when the electronic device operates in a plurality of control modes, judge whether the conducted interference is present in the electronic device according to the acquired received signal strength indicator value, if the conducted interference is not present, continue to search for a conducted interference source and perform a debugging operation corresponding to the conducted interference source according to the conducted interference source, and if the conducted interference is present, perform no debugging operation.
